# EUROPÄISCHE PATENTANMELDUNG

(11) **EP 1 318 300 A1**
(43) Veröffentlichungstag der Anmeldung: **11.06.2003**
(21) Anmeldenummer: 02027287.8
(22) Anmeldetag: 06.12.2002
(51) Int. Cl.: F03D 11/04, F03D 11/00, E04H 12/34

(54) **Verfahren zum Herstellen eines Turms einer Windkraftanlage**

(30) Priorität: 06.12.2001 DE 10160022
(71) Anmelder: GENERAL ELECTRIC COMPANY, Schenectady, NY 12345 (US)
(72) Erfinder: Becker, Markus, 48149 Münster (DE)
(74) Vertreter: Zimmermann, Gerd Heinrich

(57) **Zusammenfassung**

Die Erfindung betrifft ein Verfahren zum Herstellen eines Turms einer Windkraftanlage, bei dem vorgefertigte Bauelemente übereinander angeordnet, ausgerichtet und miteinander verbunden werden, wobei nach der Ausrichtung der übereinander angeordneten Bauelemente mindestens ein dazwischen vorhandener Hohlraum zumindest teilweise mit einer Vergußmasse gefüllt wird.

## Beschreibung

Die Erfindung betrifft ein Verfahren zum Herstellen eines Turms einer Windkraftanlage, bei dem vorgefertigte Bauelemente übereinander angeordnet, ausgerichtet und miteinander verbunden werden, ein mit einem derartigen Verfahren hergestellten Turm für eine Windkraftanlage sowie Bauelemente und Bauelementsegmente zur Herstellung derartiger Türme.

Herkömmliche Windkraftanlagen umfassen einen Turm, eine an der Spitze des Turms um eine vertikale Drehachse drehbar daran montierte Gondel sowie einen um eine im wesentlichen horizontal verlaufende Rotorachse drehbar an der Gondel montierten und mindestens ein Rotorblatt aufweisenden Rotor. Bei modernen Windkraftanlagen mit einer Nennleistung von mehr als einem MW weist der Rotor einen Durchmesser von 70 m oder mehr auf. Der dazugehörige Turm wird mit einer Höhe bis zu 100 m ausgeführt. Zum Erhalt einer hinreichenden Stabilität derartiger Türme unter gleichzeitiger Gewährleistung geringer Montagekosten werden die Türme herkömmlicher Windkraftanlagen aus Stahlblechen hergestellt. Daneben werden in einigen Fällen auch stapelbare Betonfertigteile eingesetzt. Dabei werden die Türme üblicherweise aus einzelnen kreiszylindermantelförmigen oder kegelstumpfförmigen Bauelementen den sogenannten Turmschüssen mit einer einen Transport mit zumutbarem Aufwand noch ermöglichenden Länge von 30 m oder mehr zusammengesetzt. Diese Turmschüsse werden vor Ort übereinander angeordnet, derart ausgerichtet, daß sie genau miteinander fluchten und fest miteinander verbunden sind.

Zur Vermeidung übermäßiger Materialbeanspruchungen weisen Turmschüsse zur Herstellung herkömmlicher Türme an ihren einander entgegengesetzten axialen Enden in den Innenraum des Turmes ragende umlaufende Flansche auf, welche Kontaktflächen für die übereinander montierten Bauelemente bilden. Bei der Montage von Türmen für Windkraftanlagen muß zum Erhalt der gewünschten mechanischen Belastbarkeit und aus optischen Gründen sichergestellt werden, daß die einzelnen übereinander montierten Bauelemente genau miteinander fluchten. Das führt angesichts der Bauelementtoleranzen insbesondere im Bereich der im allgemeinen geschmiedeten Flansche dazu, daß zwischen den einzelnen Bauelementen bei fluchtender Ausrichtung Hohlräume in Form von Spalten gebildet werden. Bei herkömmlichen Verfahren zum Herstellen von Türmen für Windkraftanlagen werden diese Hohlräume durch entsprechenden Anzug der zur Herstellung der festen Verbindung zwischen aufeinanderfolgenden Bauelementen im allgemeinen eingesetzten Schraubbolzen verschlossen. Das führt zu einer starken Beanspruchung dieser Schraubbolzen, welche bei Windlast weiter mechanisch beansprucht werden und dann auch beschädigt werden können.

Angesichts dieses Problems im Stand der Technik wurde bereits vorgeschlagen, nach Ausrichtung der Turmschüsse noch vorhandenen Hohlräume durch Einsatz geeigneter Paßstücke zu verschließen. Allerdings hat es sich gezeigt, daß auch bei so hergestellten Türmen von Windkraftanlagen nach vergleichsweise kurzen Betriebszeiten Beschädigungen an den Schraubverbindungen zwischen aufeinanderfolgenden Turmschüssen beobachtet werden. Besonders deutlich tritt dieses Problem bei großen Windkraftanlagen mit Türmen hervor, deren Turmschüsse aus einer Anzahl von in Umfangsrichtung miteinander verbunden und sich jeweils in Längsrichtung des Turms erstreckenden Bauelementsegmenten hergestellt sind. Eine derartige Konstruktion wird gewählt, wenn sich die Turmschüsse aufgrund ihres Außendurchmessers nicht mehr ohne übermäßigen Aufwand transportieren lassen und nur noch zur Herstellung dieser Turmschüsse geeignete Bauelementsegmente mit zumutbarem Aufwand transportierbar sind.

Angesichts dieser Probleme liegt der Erfindung die Aufgabe zugrunde, Verfahren der eingangs beschriebenen Art bereitzustellen, welche die Errichtung eines stabilen und während des Betriebs der Windkraftanlage haltbaren Turms bei gleichzeitiger Gewährleistung wirtschaftlicher Montagebedingungen ermöglichen sowie mit derartigen Verfahren hergestellte Türme und zur Herstellung derartiger Türme geeignete Bauelemente anzugeben.

In verfahrensmäßiger Hinsicht wird diese Aufgabe durch eine Weiterbildung der bekannten Verfahren gelöst, die im wesentlichen dadurch gekennzeichnet ist, daß nach der fluchtenden Ausrichtung der übereinander angeordneten Bauelemente mindestens ein dazwischen vorhandener beispielsweise spaltförmiger Hohlraum zumindest teilsweise mit einer Vergußmasse gefüllt wird. Im Hinblick auf die beim Betrieb von Windkraftanlagen auftretenden Ermüdungsbeanspruchungen und zur Einhaltung der für die Berechnung der Verschraubungen notwendigen Randbedingungen ist es besonders zweckmäßig, wenn die Hohlräume vollständig mit der Vergußmasse gefüllt werden.

Diese Lösung der der Erfindung zugrundeliegenden Aufgabe geht auf die Erkenntnis zurück, daß es auch bei Verwendung von Paßstücken zum Verschließen von zwischen aufeinanderfolgenden Bauelementen noch vorhandenen Spalten nicht zu einer definierten Auflage dieser Bauelemente kommt und aus diesem Grund auch keine definierte Krafteinleitung im Bereich der Verbindungselemente erfolgt. Durch Einsatz erfindungsgemäßer Verfahren wird dieser Mangel dadurch beseitigt, daß der Hohlraum mit einer Vergußmasse, also einem fluiden Medium, das sich gleichmäßig in dem ganzen Hohlraum verteilen kann, gefüllt wird, um so eine vollständige Auflage der aufeinanderfolgenden Bauelemente im Bereich ihrer Kontaktflächen unter Vermittlung der (erstarrten) Vergußmasse zu gewährleisten. Dadurch wird auch eine definierte Krafteinleitung in die Verbindungselemente zwischen aufeinanderfolgenden Bauelementen gewährleistet und eine zu Beschädigungen dieser Verbindungselemente führende Überbeanspruchung vermieden. Wie Eingangs bereits erläutert, wird das erfindungsgemäße Verfahren mit besonderem Vorteil eingesetzt, wenn die vorgefertigten Bauelemente aus in Längsrichtung des Turms verlaufenden und in Umfangsrichtung miteinander verbundenen Bauelementsegmenten, vorzugsweise in Form von Kegelstumpf- oder Kreiszylindermantelsegmenten hergestellt werden.

Zweckmäßigerweise erfolgt die Füllung der Hohlräume vor der festen Verbindung der Bauelemente miteinander. In diesem Fall werden die Hohlräume unter Auslassung von mindestens einer zur Durchführung eines Verbindungselementes, wie etwa eines Schraubbolzens, geeigneten Durchgangsöffnung gefüllt. Dazu kann beispielsweise eine entsprechende Hülse in den mit der Vergußmasse zu füllenden Hohlraum eingesetzt werden, welche nach der Füllung des Hohlraums ein beispielsweise in Form eines Schraubbolzen gebildetes Verbindungselement aufnimmt.

Im Rahmen der Erfindung ist auch an die Ausführung solcher Verfahren gedacht, bei denen die Ausrichtung der einzelnen Bauelemente zunächst in herkömmlicher Weise unter Zuhilfenahme von geeigneten Paßblechen o. dgl. erfolgt. Als besonders vorteilhaft hat es sich jedoch erwiesen, wenn die Bauelemente mit Hilfe von mindestens einem an dem Bauelement selbst angebrachten Ausrichtungselement ausgerichtet werden. Derartige Ausrichtungselemente können beispielsweise in Form von Nivellierschrauben gebildet sein, die in eine Gewindebohrung des nach innen ragenden Flansches am unteren und/oder oberen Ende des entsprechenden Bauelementes angeordnet sind und mit ihrem dem Schraubenkopf abgewandten Ende an den gegenüberliegenden Flansch des benachbarten Bauelementes angreifen. Zweckmäßigerweise weist das mit entsprechenden Ausrichtungselementen ausgestattete Bauelement mindestens drei in Winkelabständen von etwa 120° angebrachte Ausrichtungselemente auf, um so einerseits eine stabile Ausrichtung der Bauelemente zu erreichen und andererseits einen unnötigen Bauelementaufwand zu vermeiden.

Zum Erhalt der benötigten mechanischen Stabilität weist die Vergußmasse zweckmäßigerweise eine hohe zulässige Flächenpressung von vorzugsweise mehr als 150 N/mm², besonders bevorzugt mehr als 250 N/mm² insbesondere mehr als 400 N/mm² auf.

Die Viskosität der Vergußmasse kann von pastös bis flüssig variieren. Bei Anwendung von pastösen Vergußmassen muß diese vor dem abschließenden Aufstellen des nächsten Bauelementes auf den Flansch aufgebracht werden. Dabei ist die Menge so zu bemessen, daß sichergestellt ist, daß der Spalt zwischen den Flanschen vollständig gefüllt ist. Bei Anwendung flüssiger Vergußmassen muß die Masse so flüssig sein, daß sichergestellt ist, daß die vorhandene Schalung vollständig gefüllt wird.

Das Fließverhalten der in den Hohlraum zu füllenden Gußmasse kann verbessert werden, wenn der Hohlraum durch Vakuuminjektion mit der Gußmasse gefüllt wird. Dadurch wird ohne Bearbeitung der Flansche ein sauberer Formschluß erreicht, welcher eine definierte Krafteinleitung sicherstellt.

Wie der vorstehenden Erläuterung erfindungsgemäßer Verfahren zu entnehmen ist, zeichnet sich ein mit dem Verfahren hergestellter Turm für eine Windkraftanlage mit einer Mehrzahl von übereinander angeordneten und miteinander verbundenen Bauelementen im wesentlichen dadurch aus, daß mindestens ein zwischen den übereinander angeordneten Bauelementen gebildeter Hohlraum zumindest teilweise mit einer Vergußmasse gefüllt ist, wobei mindestens eines der Bauelemente an einem oberen Rand einen vorzugsweise umlaufenden, in den Innenraum des Turms ragenden Flansch aufweisen kann und das darüber angeordnete Bauelement an seinem unteren Rand mit einem vorzugsweise umlaufenden und in den Innenraum des Turmes ragenden Flansch versehen sein kann.

Beim Verfüllen des Hohlraums kann die Vergußmasse unter Umständen seitlich aus dem Hohlraum auslaufen. Zur Vermeidung derartiger Effekte hat es sich als zweckmäßig erwiesen, wenn der Hohlraum seitlich von mindestens einem vorzugsweise an einem der Bauelemente befestigten Schalungselement begrenzt ist. Dieses Schalungselement kann beispielsweise in Form einer den Turm umlaufenden Kreiszylindermantelfläche gebildet sein, welche im Bereich eines der Flansche der Bauelemente befestigt ist und sich ausgehend von diesem Flansch in Richtung auf das benachbarte Bauelement erstreckt. Zweckmäßigerweise werden mindestens zwei den Hohlraum innen und außen begrenzende Schalungselemente eingesetzt. Zur Vermeidung einer optischen Beeinträchtigung des Turms durch Einsatz dieser Schalungselemente hat es sich als zweckmäßig erwiesen, wenn ein den Hohlraum im Bereich der äußeren Mantelfläche des Turmes begrenzendes Schalungselement aus einem transparenten Material besteht.

Wie vorstehend bereits erläutert, sind die Bauelemente eines erfindungsgemäßen Turms zweckmäßigerweise mit mindestens einem, vorzugsweise jedoch mit einer Vielzahl von über den Umfang des Turms verteilt angeordneten Schraubbolzen miteinander verbunden, wobei mindestens einer vorzugsweise jeder dieser Schraubbolzen eine in die Vergußmasse eingebettete Hülse durchsetzt. Zum Erhalt einer fluchtenden Ausrichtung der einzelnen Bauelemente kann mindestens eines der Bauelemente mit mindestens einem Ausrichtungselement ausgestattet sein, wobei dieses Ausrichtungselement zweckmäßigerweise eine in einer vorzugsweise in mindestens einem der Flansche vorgesehenen Gewindebohrung des Bauelementes aufgenommene Nivellierschraube mit etwa parallel zur Längsachse des Turms verlaufender Längsachse ist. Das Befüllen des Hohlraums der Vergußmasse kann erleichtert werden, wenn mindestens eine in einem der Flansche vorgesehene in den Hohlraum mündende Einfüllöffnung für die Vergußmasse vorgesehen ist. Insbesondere bei erfindungsgemäßen Türmen für Windkraftanlagen mit hohen Nennleistungen kann mindestens eines der Bauelemente aus einer Mehrzahl von sich jeweils in Längsrichtung des Turms erstreckenden und in Umfangsrichtung des Turmes miteinander verbundenen Bauelementen bestehen. Wie eingangs bereits erläutert, hat es sich als besonders günstig erwiesen, wenn die Vergußmasse mittels Vakuuminjektion in den Hohlraum gefüllt wird. Dazu ist der Hohlraum vorzugsweise zumindest teilweise gasdicht abgeschlossen, wobei zum Erhalt eines gasdichten Abschlusses eine geeignete, benachbarte Flansche zumindest teilweise umlaufende Folie eingesetzt werden kann.

Ein Bauelement zur Herstellung eines erfindungsgemäßen Turms weist zweckmäßigerweise mindestens einen in den Innenraum des Turmes ragenden Flansch auf, der mit mindestens einem sich in Richtung auf ein benachbartes Bauelement erstreckenden Schalungselement ausgestattet ist.

Dieses Bauelement kann ein oder mehrere in Form von Nivellierschrauben verwirklichte Ausrichtungselemente und/oder eine in den Hohlraum mündende Einfüllöffnung für die Vergußmasse aufweisen.

Falls längsgeteilte Turmschüsse eingesetzt werden, weisen zur Herstellung dieser Turmschüsse geeignete erfindungsgemäße Bauelementsegmente ebenfalls ein in den Innenraum des Turmes ragendes Flanschsegment mit einem Schalungselement auf, wobei das Bauelement zusätzlich auch noch mit einem oder mehreren Ausrichtungselementen und/oder einer Einfüllöffnung für die Vergußmasse ausgestattet sein kann.

Nachstehend wird die Erfindung unter Bezugnahme auf die Zeichnung, auf die hinsichtlich aller erfindungswesentlichen und in der Beschreibung nicht weiter herausgestellten Einzelheiten ausdrücklich verwiesen wird, erläutert. In der Zeichnung zeigt:
Fig. 1 eine erste Ausführungsform der Erfindung,
Fig. 2 eine zweite Ausführungsform der Erfindung und
Fig. 3 eine Detaildarstellung einer dritten Ausführungsform der Erfindung.

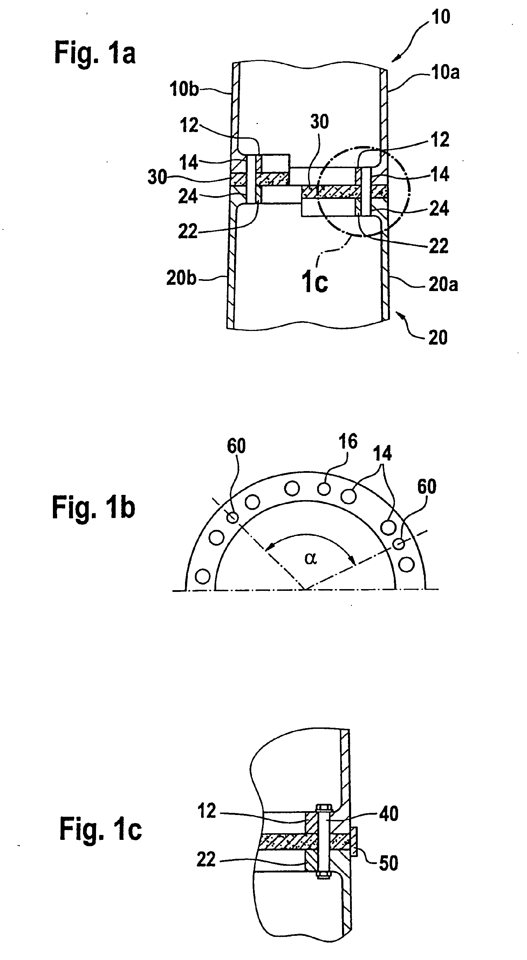

Fig. 1a zeigt einen Axialschnitt durch einen erfindungsgemäßen Turm, in dem zwei benachbarte Bauelemente 10, 20 mit im wesentlichen kegelstumpfmantelförmiger Außenfläche zu sehen sind. Jedes dieser Bauelemente 10, 20 besteht aus einer Mehrzahl von in Umfangsrichtung miteinander verbundenen und sich in Längsrichtung des Turms erstreckenden Bauelementsegmenten 10a, 10b, 20a bzw. 20b von denen jedes die Form eines Ausschnitts einer Kegelstumpfmantelfläche aufweist. Am unteren Rand des Bauelementes 10 ist ein umlaufender, in den Innenraum des Turms ragender Flansch 12 vorgesehene, während am oberen Rand des Bauelementes 20 ein ebenfalls in den Innenraum des Turms ragender umlaufender Flansch 22 gebildet ist. Wie besonders deutlich aus dem Radialschnitt gemäß 1b hervorgeht, weist jeder dieser Flansche 12, 22 eine Anzahl von in Umfangsrichtung verteilt angeordneten Durchgangsbohrungen 14 auf, die jeweils zur Aufnahme eines als Verbindungselement benutzten Schraubbolzens 40 dienen, wie aus der Detaildarstellung des Ausschnittes A der Fig. 1a in Fig. 1c vorgeht.

Gemäß Fig. 1a sind die einzelnen Bauelementsegmente 10a, 10b bzw. 20a bzw. 20b der Bauelemente 10, 20 in Längsrichtung des Turms geringfügig gegeneinander versetzt. Bei dem erfindungsgemäßen Turm wird eine fluchtende Ausrichtung der Bauelemente 10, 20 dadurch gewährleistet, daß ein von den Flanschen 12, 22 begrenzter Hohlraum zwischen den Bauelementen 10, 20 vollständig mit einer Vergußmasse 30 gefüllt ist. Dabei kann es sich um eine mineralische und/oder organische Vergußmasse mit einer hohen zulässigen Flächenpressung von vorzugsweise mehr als 400 N/mm² handeln. Diese Vergußmasse kann durch eine oder mehrere Einfüllöffnungen 60 (vgl. Fig. 1b) im Flansch 12 des Bauelementes 10 in den Hohlraum gefüllt werden. Dabei werden zweckmäßigerweise vor Einfüllen der Vergußmasse geeignete Hülsen im Bereich der zur Aufnahme des Schraubbolzens 40 dienenden Öffnung 14 bzw. 24 in den Hohlraum eingesetzt, damit eine spätere Verbindung der Bauelemente 10, 20 mit Hilfe der Schraubbolzen 40 nicht durch die Vergußmasse behindert wird. Vor Einfüllen der Vergußmasse 30 kann eine fluchtende Ausrichtung der Bauelemente 10, 20 mit Hilfe von Gewindebohrungen im Flansch 12 durchsetzenden Nivellierschrauben 60 erzeugt werden, welche mit ihrem dem Flansch 22 zugewandten Ende auf dem Flansch 22 aufliegen.

Bei der in Fig. 1 dargestellten Ausführungsform der Erfindung wird das Ausfließen der Vergußmasse 30 aus dem Hohlraum mit Hilfe eines transparenten Schalungselementes 50 verhindert, welches die Mantelfläche des Turms umläuft.

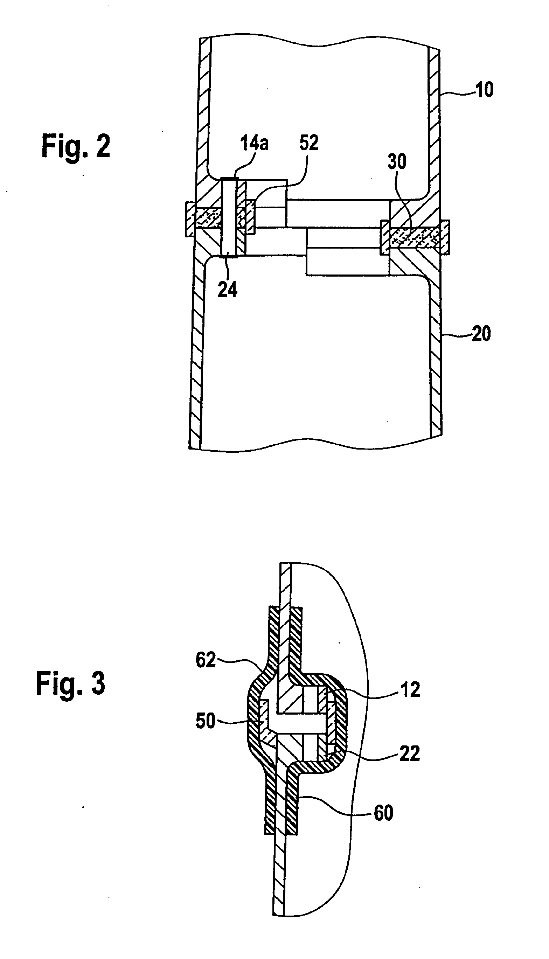

Die in Fig. 2 dargestellte Ausführungsform der Erfindung unterscheidet sich im wesentlichen nur dadurch anhand der Fig. 1 erläuterten Ausführungsform, daß zusätzlich zu dem die Mantelfläche des Turms umlaufenden Schalungselement 50 auch noch ein im Innenraum des Turmes angeordnetes Schalungselement 52 angeordnet ist, welches das Ausfließen der Vergußmasse in den Innenraum verhindert. Ferner ist in Fig. 2 auch noch eine in die Öffnungen 14 bzw. 24 der Flansche 12, 22 eingesetzte Hülse 14a dargestellt, welche zur Aufnahme des Schraubbolzens 40 nach Einfüllen der Vergußmasse 30 in den Hohlraum dient.

Bei der in Fig. 3 dargestellten Ausführungsform der Erfindung ist zusätzlich zu dem am Bauelement 20 befestigten Schalungselement 50 auch noch eine gasdichte Abdeckung des Hohlraums mit Hilfe von Kunststoffolien 60 und 62 vorgesehen, wobei die Kunststoffolie 60 die Flansche 12, 22 im Bereich des Innenraums des Turms umläuft, während die Kunststoffolie 62 einen äußeren gasdichten Abschluß des Hohlraums sicherstellt. In dem so gasdicht verschlossenen Hohlraum kann ein Unterdruck erzeugt werden, welcher die Verteilung der Vergußmasse in dem Hohlraum fördert, wenn die Vergußmasse mittels eines sogenannten Vakuuminjektionsverfahren in den Hohlraum gefüllt wird.

Die Erfindung ist nicht auf die anhand der Zeichnung erläuterten Ausführungsformen beschränkt. Vielmehr ist auch solche Ausführungsformen gedacht, bei denen die Schalungselemente und/oder die zur Aufnahme der Schraubbolzen dienenden Hülsen einstückig mit den Bauelementen gebildet sind. Ferner ist auch an solche Ausführungsformen gedacht, bei denen nur ein äußerer und/oder ein innerer Randbereich des zwischen den Flanschen gebildeten Hohlraums mit einer Vergußmasse gefüllt wird. Auch können anstelle von Nivellierschrauben andere Mittel zum Ausrichten der Bauelemente eingesetzt werden.

## Patentansprüche

1. Verfahren zum Herstellen eines Turms einer Windkraftanlage, bei dem vorgefertigte Bauelemente übereinander angeordnet, ausgerichtet und miteinander verbunden werden, wobei mindestens eines der Bauelemente an seinem oberen Rand einen vorzugsweise umlaufenden und in den Innenraum des Turms ragenden Flansch aufweist und das darüber angeordnete Bauelement an seinem unteren Rand mit einem vorzugsweise umlaufenden und in den Innenraum des Turms ragenden Flansch versehen ist, und wobei nach der Ausrichtung der übereinander angeordneten Bauelemente mindestens ein dazwischen vorhandener Hohlraum zumindest teilweise mit einer Vergussmasse gefüllt wird.

2. Verfahren nach Anspruch 1, **dadurch gekennzeichnet, dass** die vorgefertigten Bauelemente aus in Längsrichtung des Turms verlaufenden Bauelementsegmenten, vorzugsweise in Kegelstumpf- oder Kreiszylindermantelsegmenten hergestellt werden.

3. Verfahren nach Anspruch 1 oder 2, **dadurch gekennzeichnet, dass** der Hohlraum unter Auslassung von mindestens einer zur Durchführung eines Verbindungselementes, wie etwa eines Schraubbolzens, geeigneten Durchgangsöffnung gefüllt wird.

4. Verfahren nach einem der vorhergehenden Ansprüche, **dadurch gekennzeichnet, dass** die Bauelemente mit Hilfe von an mindestens einem der Bauelemente angebrachten Ausrichtungselementen ausgerichtet werden.

5. Verfahren nach einem der vorhergehenden Ansprüche, **dadurch gekennzeichnet, dass** die Vergussmasse eine zulässige Flächenpressung von mehr als 150, vorzugsweise mehr als 250, besonders bevorzugt mehr als 400 N/mm² aufweist.

6. Verfahren nach einem der vorhergehenden Ansprüche, **dadurch gekennzeichnet, dass** der Hohlraum durch Vakuuminjektion mit der Vergussmasse gefüllt wird.

7. Turm für eine Windkraftanlage mit einer Mehrzahl von übereinander angeordneten und miteinander verbundenen Bauelementen (10, 20), wobei mindestens eines der Bauelemente (10, 20) an seinem oberen Rand einen vorzugsweise umlaufenden und in den Innenraum des Turmes ragenden Flansch (22) aufweist und das darüber angeordnete Bauelement (10) an seinem unteren Rand mit einem vorzugsweise umlaufenden und in den Innenraum des Turms ragenden Flansch (12) versehen ist, und wobei mindestens ein zwischen den übereinander angeordneten Bauelementen (10, 20) gebildeter Hohlraum zumindest teilweise mit einer Vergussmasse (30) gefüllt ist.

8. Turm nach Anspruch 7, **dadurch gekennzeichnet, dass** der Hohlraum seitlich von mindestens einem vorzugsweise an einem der Bauelemente befestigten Schalungselement (50, 52) begrenzt ist.

9. Turm nach Anspruch 8, **dadurch gekennzeichnet, dass** ein den Hohlraum im Bereich der äußeren Mantelfläche des Turms begrenzendes Schalungselement (50) aus einem transparenten Material besteht.

10. Turm nach einem der Ansprüche 7 bis 9, **dadurch gekennzeichnet, dass** die Bauelemente (10, 20) mit mindestens einem Schraubbolzen (40) miteinander verbunden sind.

11. Turm nach Anspruch 10, **dadurch gekennzeichnet, dass** der Schraubbolzen eine in die Vergussmasse eingebettete Hülse (14a) durchsetzt.

12. Turm nach einem der Ansprüche 7 bis 11, **dadurch gekennzeichnet, dass** mindestens eines der Bauelemente mindestens ein Ausrichtungselement (60) zum Ausrichten dieses Bauelementes bzgl. einem benachbarten Bauelement aufweist.

13. Turm nach Anspruch 12, **dadurch gekennzeichnet, dass** das Ausrichtungselement (60) eine in einer vorzugsweise in einem der Flansche (12) vorgesehene Gewindebohrung des Bauelementes (10) aufgenommene Nivellierschraube mit etwa parallel zur Längsachse des Turms verlaufender Längsachse ist.

14. Turm nach einem der Ansprüche 7 bis 13, **gekennzeichnet durch** mindestens eine in einem der Flansche (12) vorgesehene und in den Hohlraum mündende Einfüllöffnung (16) für die Vergussmasse (30).

15. Turm nach einem der Ansprüche 7 bis 14, **dadurch gekennzeichnet, dass** mindestens eines der Bauelemente (10, 20) aus einer Mehrzahl von sich jeweils in Längsrichtung des Turms erstreckenden und in Umfangsrichtung des Turms miteinander verbundenen Bauelementsegmenten (10a, 10b, 20a, 20b) besteht.

16. Turm nach einem der Ansprüche 7 bis 15, **dadurch gekennzeichnet, dass** der Hohlraum zumindest teilweise gasdicht abgeschlossen ist.

17. Turm nach einem der Ansprüche 7 bis 16, **dadurch gekennzeichnet, dass** die Vergussmasse (30) eine zulässige Flächenpressung von mehr als 150, vorzugsweise mehr als 250, besonders bevorzugt mehr als 400 N/mm² aufweist.

18. Bauelement zur Herstellung eines Turms nach einem der Ansprüche 7 bis 17.

19. Bauelementsegment zur Herstellung eines Bauelementes nach Anspruch 18.
